# EUROPEAN PATENT SPECIFICATION

(11) **EP 3 538 934 B1**
(45) Date of publication and mention of the grant of the patent: **24.05.2023**
(21) Application number: 17801487.4
(22) Date of filing: 10.11.2017
(51) Int. Cl.: G02B 1/113, G02B 13/14, G02B 3/00, G02B 5/20

(54) **A LENS ARRAY FOR AN OPTICAL INSTRUMENT**
LINSENANORDNUNG FÜR EIN OPTISCHES INSTRUMENT
RÉSEAU DE LENTILLES POUR INSTRUMENT OPTIQUE

(30) Priority: 14.11.2016 FI 20165850
(43) Date of publication of application: 18.09.2019
(73) Proprietor: Turun Yliopisto, 20014 Turun yliopisto (FI); Arrow Weighing System PVT. Ltd., Naraina, New Delhi 110028 (IN)
(72) Inventor: KUMAR, Dinesh, New Delhi 110028 (IN)
(74) Representative: Berggren Oy
(86) International application number: PCT/FI2017/050779
(87) International publication number: WO 2018/087432

(56) References cited:
- US-A1- 2014 091 419
- "Handbook of optical systems, Aberration theory and correction of optical systems, Chapter 31: Correction of Aberrations ED - Gross H", 1 January 2007 (2007-01-01), HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, XP002719371, ISBN: 978-3-527-40379-0 tables 31-1 pages 225,249

## Description

### Field of the disclosure

The disclosure relates to a lens-array for an optical instrument that can be, for example but not necessarily, an optical instrument suitable for testing based on up-converting "UPC" nanoparticles as reporter molecules.

### Background

In many cases, an essential element of an optical instrument is a lens system provided on a light propagation path from an object being examined to a sensor device configured to generate an electric signal in response to receiving light from the object being examined. The lens system can be configured to for example focus, collimate, and/or optically filter the light that arrives from the object being examined. The optical filtering comprises typically suppressing one or more parts of the spectrum of the light. For example, there can be a need to suppress infrared "IR" radiation and/or ultraviolet "UV" radiation. The IR radiation is typically deemed to be electromagnetic radiation whose wavelength is between 700 and 1100 nm and the UV radiation is typically deemed to be electromagnetic radiation whose wavelength is less than 450 nm and more than the wavelength of X-rays. In this document, the term "light" is not limited to mean visible light only but the light may contain wavelengths, e.g. IR and/or UV, outside the wavelength area of the visible light. An optical instrument can be, for example but not necessarily, an optical instrument suitable for testing based on up-converting "UPC" nanoparticles as reporter molecules.

In order to achieve desired optical properties, a lens system of an optical instrument comprises typically many lenses whose geometric optical axes are arranged to coincide with each other and which are made of suitable optical materials such as for example optical glass, e.g. N-BAF10, N-SF10, and N-BK7. The above-mentioned optical filtering can be implemented by coating one or more optical surfaces, i.e. light ingress surfaces and/or light egress surfaces, of the lenses of the lens system with one or more suitable filtering layers.

An inherent drawback of a lens system of the kind mentioned above is that reflections occur in many places in the lens system because the lens system comprises many lenses and thus there are many optical surfaces on the light propagation path. The reflections can be reduced by using antireflective layers on the optical surfaces of the lenses. An antireflective layer can be for example a layer of magnesium fluoride "MgF₂" so that the thickness of the antireflective layer is substantially one quarter of the principal wavelength under consideration, i.e. a X/4-layer. Typically, a more effective reduction of reflections can be achieved so that each antireflective layer is a multilayer structure that comprises two or more, e.g. three, sub-layers so that adjacent ones of the sub-layers are made of different materials. In many cases it may be, however, challenging to construct a lens system which has desired filtering and other optical properties so that the loss caused by reflections occurring in different places of the lens system is low enough.

### Summary

The following presents a simplified summary in order to provide basic understanding of some aspects of various embodiments of the invention. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric line or axis, a geometric plane, a non-planar geometric surface, a geometric room, or any other geometric entity that is one, two, or three dimensional.

In accordance with the invention, there is provided a new lens-array for an optical instrument that can be, for example but not necessarily, an optical instrument suitable for testing based on up-converting "UPC" nanoparticles as reporter molecules.

A lens-array according to the invention comprises:
- a first lens, a first optical surface of the first lens being coated with a first antireflective layer and a second optical surface of the first lens being coated with a first filtering layer for suppressing ultraviolet radiation,
- a second lens, a first optical surface of the second lens being coated with a second filtering layer for suppressing infrared radiation and a second optical surface of the second lens being coated with a second antireflective layer.

The lens-array further comprises a third antireflective layer and, in order to reduce reflections within the lens-array, the first and second lenses are bound together with transparent sealing material so that the first and second filtering layers are between the first and second lenses, the third antireflective layer is between the first and second filtering layers, and a light propagation path between the first and second lenses is free from gaps. The transparent sealing material can be for example epoxy resin, some other polymer-based glue, or some other suitable material for attaching the first and second lenses together.

In accordance with the invention, there is provided also a new lens system that comprises lens-arrays each being according to the invention, wherein the lens-arrays are positioned with respect to each other so that the optical axes of the lens-arrays coincide with each other.

In accordance with the invention, there is provided also a new optical instrument that can be, for example but not necessarily, an optical instrument suitable for point-of-care testing based on up-converting "UPC" nanoparticles as reporter molecules.

An optical instrument according to the invention comprises:
- an excitation source for generating excitation light so as to excite an object under examination,
- a sensor device for generating an electric signal in response to receiving light arriving from the object under examination, and
- a lens system according to the invention on the light propagation path from the object under examination to the sensor device.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below with reference to the accompanying drawings, in which:
figures 1a and 1b illustrate a lens-array,
figure 2 illustrates a lens system,
figure 3a, and 3b illustrate optical instruments, and
   figure 3c illustrates an optical instrument according to an embodiment of the invention.

**Description of exemplifying embodiments**

The specific examples provided in the description given below should not be construed as limiting the scope and/or the applicability of the appended claims. Lists and groups of examples provided in the description given below are not exhaustive unless otherwise explicitly stated.

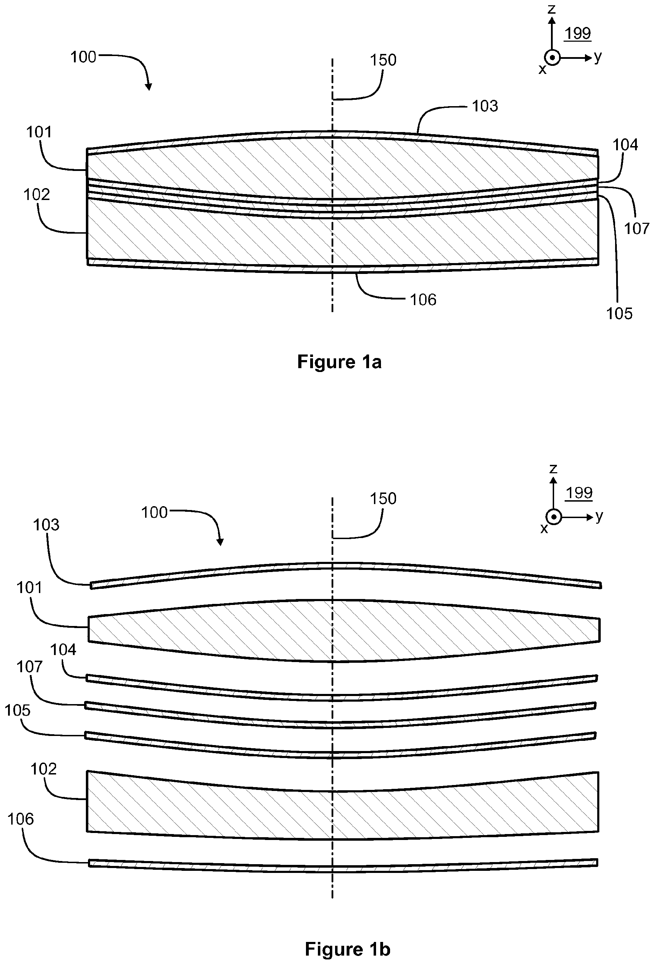

Figure 1a shows a section view of a lens-array 100.

Figure 1b shows an exploded section view of the lens-array 100. In figures 1a and 1b, the section plane is parallel with the yz-plane of a coordinate system 199. The lens-array can be rotationally symmetric with respect to a geometric axis 150 which is presented with a dot-and-dash line in figures 1a and 1b. The geometric axis 150 is parallel with the z-axis of the coordinate system 199. It is, however, also possible that the lens-array has a shape deviating from a rotationally symmetric shape.

The lens-array 100 comprises a first lens 101 and a second lens 102. The material of the first lens 101 can be for example optical glass that can be e.g. N-BAF10, N-SF10, or N-BK7. Correspondingly, the material of the second lens 102 can be for example optical glass that can be e.g. N-BAF10, N-SF10, or N-BK7. Advantageously, the first and second lenses 101 and 102 are made of different optical materials so that dispersions of the optical materials partially compensate for each other, producing reduced chromatic aberration compared to a singlet lens with the same focal length. A first optical surface of the first lens 101 is coated with a first antireflective layer 103 and a second optical surface of the first lens 101 is coated with a first filtering layer 104 for suppressing ultraviolet "UV" radiation. A first optical surface of the second lens 102 is coated with a second filtering layer 105 for suppressing infrared "IR" radiation and a second optical surface of the second lens 102 is coated with a second antireflective layer 106. The lens-array 100 further comprises a third antireflective layer 107.

In order to reduce reflections within the lens-array 100, the first and second lenses 101 and 102 are bound together with transparent sealing material so that the third antireflective layer 107 is between the first and second filtering layers 104 and 105 and the light propagation path between the first and second lenses 101 and 102 is free from gaps. The transparent sealing material can be for example epoxy resin or some other suitable material for attaching the first and second lenses together. The location of the transparent sealing material depends on the manufacturing technology of the lens-array 100. In an exemplifying case, the first filtering layer 104 is deposited on the second optical surface of the first lens 101, the third antireflective layer 107 is deposited on the first filtering layer 104, and the second filtering layer 105 is deposited on the first optical surface of the second lens 102. In this exemplifying case, the transparent sealing material is between the third antireflective layer 107 and the second filtering layer 105. In another exemplifying case, the first filtering layer 104 is deposited on the second optical surface of the first lens 101, the second filtering layer 105 is deposited on the first optical surface of the second lens 102, and the third antireflective layer 107 is deposited on the second filtering layer 105. In this exemplifying case, the transparent sealing material is between the third antireflective layer 107 and the first filtering layer 104. The refractive index of the transparent sealing material is advantageously substantially the same as the refractive index of one or both of the materials which are in contact with the transparent sealing material.

In a lens-array according to an exemplifying and non-limiting embodiment of the invention, the first, second, and third antireflective layers 103, 106, and 107 are made of magnesium fluoride "MgF₂". Other materials suitable for an antireflective layer are titan dioxide "TiO₂", silicon dioxide "SiO₂", and silicon nitrides "SiNₓ". The thickness of each of the antireflective layers can be in the range from 100 nm to 150 nm. Advantageously, the thickness of each of the antireflective layers 103, 106, and 107 is about 138 nm in which case each antireflective layer is a quarter-wavelength layer for light whose wavelength is 550 nm, i.e. X/4 at 550 nm. In a lens-array according to another exemplifying and non-limiting embodiment of the invention, at least one of the antireflective layers 103, 106, and 107 is a multilayer structure that comprises two or more sub-layers so that adjacent ones of the sub-layers are made of different materials such as for example magnesium fluoride "MgF₂", titan dioxide "TiO₂", silicon dioxide "SiO₂", and/or silicon nitride "SiNₓ".

In the exemplifying lens-array illustrated in figures 1a and 1b, the second optical surface of the first lens 101 is convex and the first optical surface of the second lens 102 is concave so that the first optical surface of the second lens 102 is fit with the second optical surface of the first lens 101. The first optical surface of the first lens 101 is convex, and the second optical surface of the second lens 102 is convex so that the convexity of the second optical surface of the second lens 102 is smaller than the convexity of the first optical surface of the first lens 101. It is, however, worth noting that lens-arrays according to different embodiments of the invention may have lens profiles different from the above-mentioned lens profiles of the exemplifying lens-array 100.

A lens-array according to an exemplifying and non-limiting embodiment of the invention can be an aspherical lens-array wherein the first lens and/or the second lens is an aspheric lens.

A lens-array according to an exemplifying and non-limiting embodiment of the invention can be manufactured by known methods for manufacturing optical devices. It is, however, also possible that a lens-array according to an exemplifying and non-limiting embodiment of the invention is manufactured by three-dimensional "3D" printing.

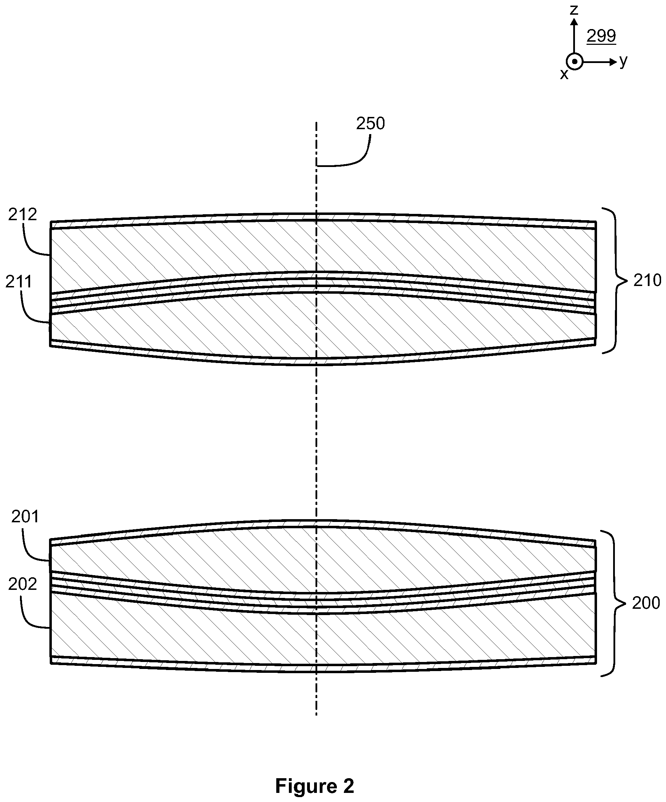

Figure 2 shows a section view of a lens system.

The section plane is parallel with the yz-plane of a coordinate system 299. The lens system can be rotationally symmetric with respect to a geometric axis 250 which is presented with a dot-and-dash line in figure 2. The geometric axis 250 is parallel with the z-axis of the coordinate system 299. It is, however, also possible that the lens system has a shape deviating from a rotationally symmetric shape. The lens system comprises lens-arrays 200 and 210 that are positioned with respect to each other so that geometric optical axes of the lens-arrays coincide with each other. In the exemplifying lens system illustrated in figure 2, the lens-array 200 comprises a first lens 201 whose both optical surfaces are convex and a second lens 202 which has a concave optical surface and a convex optical surface. The lens-array 210 comprises a first lens 211 whose both optical surfaces are convex and a second lens 212 which has a concave optical surface and a convex optical surface. The lens-arrays 200 and 210 are positioned with respect to each other so that the lens 201 of the lens-array 200 faces towards the lens 211 of the lens-array 210. In an exemplifying situation where the lens-array 200 receives diverging light, the lens-array 200 acts as a collimating device and the lens-array 210 acts as a focusing device.

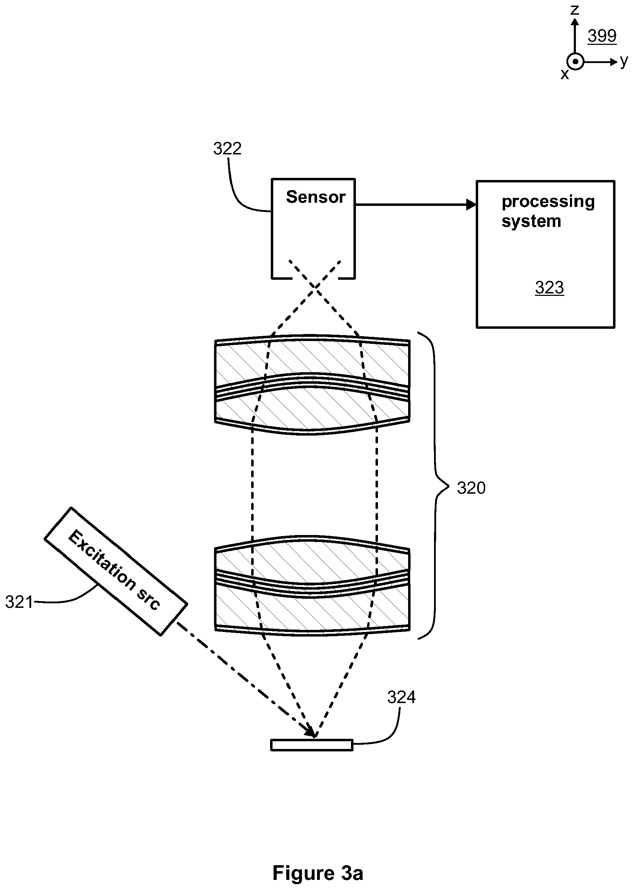

Figure 3a illustrates an optical instrument.

The optical instrument can be, for example but not necessarily, an optical instrument suitable for point-of-care testing based on up-converting "UPC" nanoparticles as reporter molecules. The optical instrument comprises an excitation source 321 for directing excitation light to an object 324 under examination. The excitation source 321 can be for example a laser tube configured to emit laser light. In an exemplifying case where the up-converting "UPC" nanoparticles are used, the excitation source 321 can be configured to emit infrared "IR" laser light whose wavelength can be e.g. 976 nm. The frequency up-conversion takes place in the object 324 under examination so that the object 324 emits light whose wavelength is shorter than that of the excitation light. In figure 3a, the excitation light is depicted with a dash-and-dot line and the light emitted by the object 324 is depicted with dashed lines.

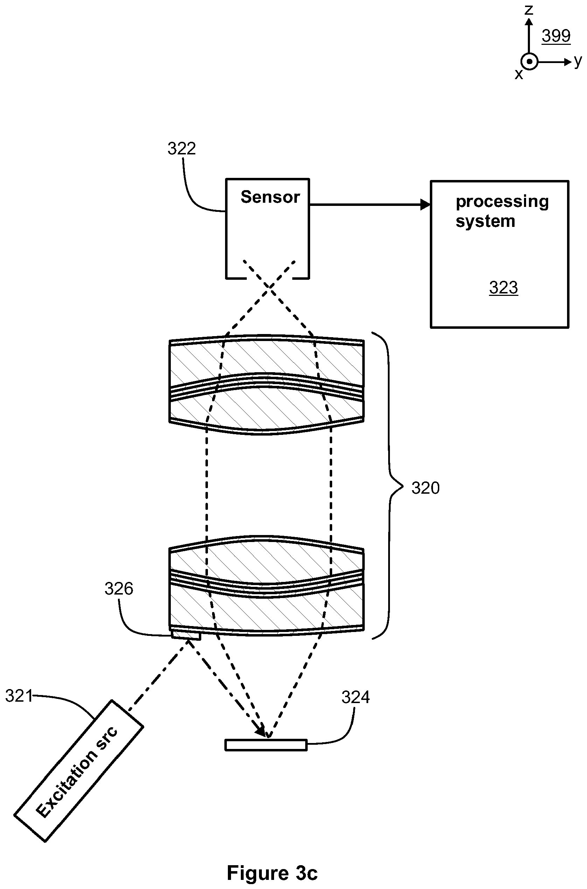

The optical instrument comprises a sensor device 322 for generating an electric signal in response to receiving light. The optical instrument comprises a lens system 320 on the light propagation path between the object 324 and the sensor device 322. The lens system 320 of Fig.3c is according to an embodiment of the invention.

The optical instrument may further comprise one or more optical filters on the light propagation path between the object 324 and the sensor device 322 so as to suppress one or more parts of the spectrum of the light. The optical filters are not shown in figure 3a. The optical instrument comprises a processing system 323 which may comprise for example an analog amplifier for amplifying the electric signal produced by the sensor device 322, an analog-to-digital converter "ADC", and a digital processing section for post-processing, recording, and/or further delivering the digital data given by the analog-to-digital converter. The digital processing section can be implemented with one or more digital processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the digital processing section may comprise one or more memory circuits such as e.g. a random access memory "RAM" circuit.

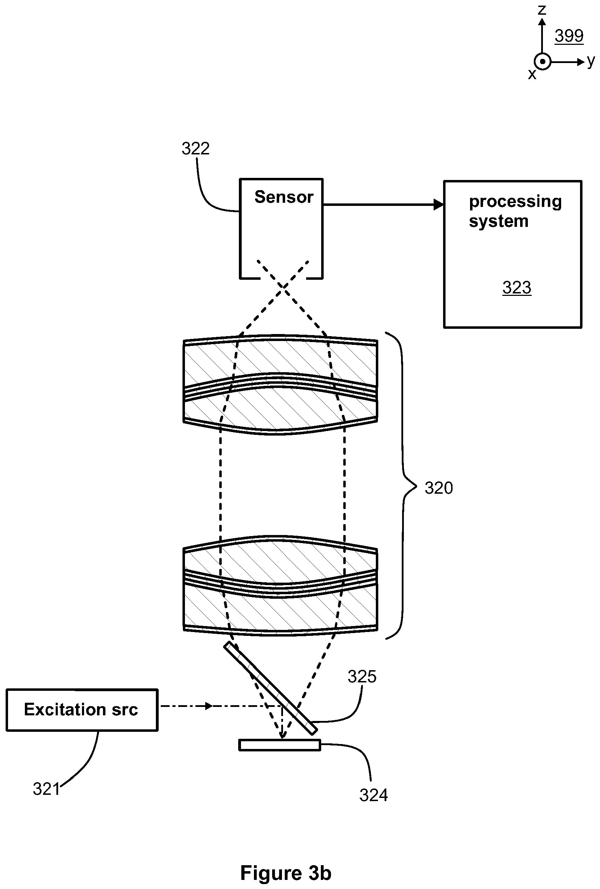

Figure 3b illustrates an optical instrument.

In this exemplifying case, the excitation light is directed with the aid of a dichroic mirror 325 to the object 324 under examination.

Figure 3c illustrates an optical instrument according to an exemplifying and non-limiting embodiment of the invention. In this exemplifying case, the excitation light is directed with the aid of a mirror section 326 to the object 324 under examination. The mirror section 326 is pasted at the rim of the low-most lens of the lens system 320, outside the focus area of the lens system. It is also possible that the mirror section 326 is ring-shaped so that it surrounds the focus area of the low-most lens of the lens system 320. In this exemplifying case, many excitation sources can be used simultaneously for exciting the object 324 under examination.

The specific examples provided in the description given above should not be construed as limiting the scope and/or the applicability of the appended claims. Lists and groups of examples provided in the description given above are not exhaustive unless otherwise explicitly stated.

## Claims

1. A lens-array (100) for an optical instrument, the lens-array comprising:
- a first lens (101), a first optical surface of the first lens being coated with a first antireflective layer (103) and a second optical surface of the first lens being coated with a first filtering layer (104) for suppressing ultraviolet radiation, and
- a second lens (102), a first optical surface of the second lens being coated with a second filtering layer (105) for suppressing infrared radiation and a second optical surface of the second lens being coated with a second antireflective layer (106),
**characterized in that** the lens-array further comprises a third antireflective layer (107), and the first and second lenses are bound together with transparent sealing material so that the first and second filtering layers are between the first and second lenses, the third antireflective layer is between the first and second filtering layers, and a light propagation path between the first and second lenses is free from gaps, and the lens-array further comprises a mirror section (326) pasted on a rim area of the second optical surface of the second lens (202).

2. A lens-array according to claim 1, wherein a refractive index of the transparent sealing material is substantially equal to a refractive index of one of materials which are in contact with the transparent sealing material.

3. A lens-array according to claim 1 or 2, wherein the first lens is made of first optical glass and the second lens is made of second optical glass, dispersions of the first and second optical glasses at least partially compensating for each other.

4. A lens-array according to any of claims 1-3, wherein each of the first, second, and third antireflective layers (103, 106, 107) comprises at least one of the following: magnesium fluoride "MgF₂", titan dioxide "TiO₂", silicon dioxide "SiO₂", silicon nitride "SiNₓ".

5. A lens-array according to any of claims 1-4, wherein a thickness of each of the first, second, and third antireflective layers (103, 106, 107) is in the range from 100 nm to 150 nm.

6. A lens-array according to any of claims 1-5, wherein the transparent sealing material is epoxy resin.

7. A lens-array according to any of claims 1-6, wherein the second optical surface of the first lens (101) is convex and the first optical surface of the second lens (102) is concave so that concavity of the first optical surface of the second lens is fit with convexity of the second optical surface of the first lens.

8. A lens-array according to any of claims 1-7, wherein the first optical surface of the first lens (101) is convex.

9. A lens-array according to claim 8, wherein the second optical surface of the second lens (102) is convex so that convexity of the second optical surface of the second lens is smaller than convexity of the first optical surface of the first lens.

10. A lens system comprising lens-arrays (200, 210) each being according to any of claims 1-9, the lens-arrays being positioned with respect to each other so that geometric optical axes of the lens-arrays coincide with each other.

11. A lens system according to claim 10, wherein the first lens (201) of a first one (200) of the lens-arrays is similar to the first lens (211) of a second one (210) of the lens-arrays, and the first and second ones of the lens-arrays (200, 210) are positioned with respect to each other so that the first optical surface of the first lens of the first one of the lens-arrays faces towards the first optical surface of the first lens of the second one of the lens-arrays.

12. An optical instrument comprising:
- an excitation source (321) for generating excitation light so as to excite an object under examination,
- a sensor device (322) for generating an electric signal in response to receiving light, and
- a lens system (320) according to claim 10 or 11 on a light propagation path from the object under examination to the sensor device, wherein the lens system (320) comprises a mirror section (326) pasted on a rim area of an optical surface of the lens system facing towards the object under examination, the mirror section being arranged to reflect the excitation light to the object under examination.

## Patentansprüche

1. Eine Linsenanordnung (100) für ein optisches Instrument, wobei die Linsenanordnung umfasst:
- eine erste Linse (101), wobei eine erste optische Oberfläche der ersten Linse mit einer ersten Antireflexionsschicht (103) beschichtet ist und eine zweite optische Oberfläche der ersten Linse mit einer ersten Filterschicht (104) zur Unterdrückung von ultravioletter Strahlung beschichtet ist, und
- eine zweite Linse (102), wobei eine erste optische Oberfläche der zweiten Linse mit einer zweiten Filterschicht (105) zur Unterdrückung von Infrarotstrahlung beschichtet ist und eine zweite optische Oberfläche der zweiten Linse mit einer zweiten Antireflexionsschicht (106) beschichtet ist,
**dadurch gekennzeichnet, dass** die Linsenanordnung außerdem eine dritte Antireflexionsschicht (107) umfasst und die erste und die zweite Linse mit einem transparenten Dichtungsmaterial zusammengebunden sind, so dass die erste und die zweite Filterschicht zwischen der ersten und der zweiten Linse liegen, die dritte Antireflexionsschicht zwischen der ersten und der zweiten Filterschicht liegt und ein Lichtausbreitungsweg zwischen der ersten und der zweiten Linse lückenlos ist, und die Linsenanordnung außerdem einen Spiegelabschnitt (326) umfasst, der auf einen Randbereich der zweiten optischen Oberfläche der zweiten Linse (202) geklebt ist.

2. Eine Linsenanordnung nach Anspruch 1, wobei der Refraktionsindex des transparenten Dichtungsmaterials im Wesentlichen gleich dem Refraktionsindex eines der Materialien ist, die in Kontakt mit dem transparenten Dichtungsmaterial stehen.

3. Eine Linsenanordnung nach Anspruch 1 oder 2, bei der die erste Linse aus einem ersten optischen Glas und die zweite Linse aus einem zweiten optischen Glas besteht, wobei sich die Dispersionen des ersten und des zweiten optischen Glases zumindest teilweise gegenseitig ausgleichen.

4. Eine Linsenanordnung nach einem der Ansprüche 1 bis 3, wobei jede der ersten, zweiten und dritten Antireflexionsschichten (103, 106, 107) mindestens eine der folgenden Schichten umfasst: Magnesiumfluorid "MgF₂", Titandioxid "TiO₂", Siliziumdioxid "SiO₂", Siliziumnitrid "SiNₓ".

5. Eine Linsenanordnung nach einem der Ansprüche 1-4, wobei die Dicke der ersten, zweiten und dritten Antireflexionsschicht (103, 106, 107) jeweils im Bereich von 100 nm bis 150 nm liegt.

6. Eine Linsenanordnung nach einem der Ansprüche 1 bis 5, wobei das transparente Versiegelungsmaterial Epoxidharz ist.

7. Eine Linsenanordnung nach einem der Ansprüche 1-6, wobei die zweite optische Oberfläche der ersten Linse (101) konvex und die erste optische Oberfläche der zweiten Linse (102) konkav ist, so dass die Konkavität der ersten optischen Oberfläche der zweiten Linse mit der Konvexität der zweiten optischen Oberfläche der ersten Linse übereinstimmt.

8. Eine Linsenanordnung nach einem der Ansprüche 1 bis 7, wobei die erste optische Fläche der ersten Linse (101) konvex ist.

9. Eine Linsenanordnung nach Anspruch 8, wobei die zweite optische Fläche der zweiten Linse (102) konvex ist, so dass die Konvexität der zweiten optischen Fläche der zweiten Linse kleiner ist als die Konvexität der ersten optischen Fläche der ersten Linse.

10. Ein Linsensystem mit Linsenanordnungen (200, 210) nach einem der Ansprüche 1 bis 9, wobei die Linsenanordnungen so zueinander positioniert sind, dass die geometrischen optischen Achsen der Linsenanordnungen miteinander übereinstimmen.

11. Ein Linsensystem nach Anspruch 10, wobei die erste Linse (201) eines ersten (200) der Linsenanordnungen der ersten Linse (211) eines zweiten (210) der Linsenanordnungen ähnelt und die ersten und zweiten Linsenanordnungen (200, 210) so zueinander positioniert sind, dass die erste optische Oberfläche der ersten Linse der ersten Linsenanordnung der ersten optischen Oberfläche der ersten Linse der zweiten Linsenanordnung gegenüberliegt.

12. Ein optisches Instrument, umfassend:
- eine Anregungsquelle (321) zur Erzeugung von Anregungslicht, um ein zu untersuchendes Objekt anzuregen,
- eine Sensorvorrichtung (322) zum Erzeugen eines elektrischen Signals als Reaktion auf den Empfang von Licht, und
- ein Linsensystem (320) nach Anspruch 10 oder 11 auf einem Lichtausbreitungsweg von dem zu untersuchenden Objekt zu der Sensorvorrichtung, wobei das Linsensystem (320) einen Spiegelabschnitt (326) umfasst, der auf einem Randbereich einer optischen Oberfläche des Linsensystems aufgeklebt ist, der dem zu untersuchenden Objekt zugewandt ist, wobei der Spiegelabschnitt so angeordnet ist, dass er das Anregungslicht zu dem zu untersuchenden Objekt reflektiert.

## Revendications

1. Réseau de lentilles (100) pour un instrument optique, le réseau de lentilles comprenant :
- une première lentille (101), une première surface optique de la première lentille étant revêtue d'une première couche antiréfléchissante (103) et une seconde surface optique de la première lentille étant revêtue d'une première couche de filtration (104) pour supprimer un rayonnement ultraviolet, et
- une seconde lentille (102), une première surface optique de la seconde lentille étant revêtue d'une seconde couche de filtration (105) pour supprimer un rayonnement infrarouge et une seconde surface optique de la seconde lentille étant revêtue d'une deuxième couche antiréfléchissante (106),
**caractérisé en ce que** le réseau de lentilles comprend en outre une troisième couche antiréfléchissante (107), et les première et seconde lentilles sont liées ensemble avec un matériau d'étanchéité transparent de sorte que les première et seconde couches de filtration se trouvent entre les première et seconde lentilles, que la troisième couche antiréfléchissante se trouve entre les première et seconde couches de filtration, et qu'un trajet de propagation de lumière entre les première et seconde lentilles est exempt d'espaces, et le réseau de lentilles comprend en outre une section miroir (326) collée sur une zone de bordure de la seconde surface optique de la seconde lentille (202).

2. Réseau de lentilles selon la revendication 1, dans lequel un indice de réfraction du matériau d'étanchéité transparent est sensiblement égal à un indice de réfraction de l'un des matériaux qui sont en contact avec le matériau d'étanchéité transparent.

3. Réseau de lentilles selon la revendication 1 ou 2, dans lequel la première lentille est constituée d'un premier verre optique et la seconde lentille est constituée d'un second verre optique, les dispersions des premier et second verres optiques se compensant au moins partiellement l'une l'autre.

4. Réseau de lentilles selon l'une quelconque des revendications 1 à 3, dans lequel chacune des première, deuxième et troisième couches antiréfléchissantes (103, 106, 107) comprend au moins l'un des éléments suivants : fluorure de magnésium « MgF₂ », dioxyde de titane « TiO₂ », dioxyde de silicium « SiO₂ », nitrure de silicium « SiNₓ ».

5. Réseau de lentilles selon l'une quelconque des revendications 1 à 4, dans lequel une épaisseur de chacune des première, deuxième et troisième couches antiréfléchissantes (103, 106, 107) se situe dans la plage de 100 nm à 150 nm.

6. Réseau de lentilles selon l'une quelconque des revendications 1 à 5, dans lequel le matériau d'étanchéité transparent est une résine époxy.

7. Réseau de lentilles selon l'une quelconque des revendications 1 à 6, dans lequel la seconde surface optique de la première lentille (101) est convexe et la première surface optique de la seconde lentille (102) est concave de sorte que la concavité de la première surface optique de la seconde lentille est ajustée avec la convexité de la seconde surface optique de la première lentille.

8. Réseau de lentilles selon l'une quelconque des revendications 1 à 7, dans lequel la première surface optique de la première lentille (101) est convexe.

9. Réseau de lentilles selon la revendication 8, dans lequel la seconde surface optique de la seconde lentille (102) est convexe de sorte que la convexité de la seconde surface optique de la seconde lentille est inférieure à la convexité de la première surface optique de la première lentille.

10. Système de lentilles comprenant des réseaux de lentilles (200, 210) étant chacun selon l'une quelconque des revendications 1 à 9, les réseaux de lentilles étant positionnés les uns par rapport aux autres de sorte que les axes optiques géométriques des réseaux de lentilles coïncident les uns avec les autres.

11. Système de lentilles selon la revendication 10, dans lequel la première lentille (201) d'un premier (200) des réseaux de lentilles est semblable à la première lentille (211) d'un second (210) des réseaux de lentilles, et les premier et second des réseaux de lentilles (200, 210) sont positionnés l'un par rapport à l'autre de sorte que la première surface optique de la première lentille du premier des réseaux de lentilles fait face à la première surface optique de la première lentille du second des réseaux de lentilles.

12. Instrument optique comprenant :
- une source d'excitation (321) pour générer une lumière d'excitation de manière à exciter un objet examiné,
- un dispositif capteur (322) pour générer un signal électrique en réponse à la réception de lumière, et
- un système de lentilles (320) selon la revendication 10 ou 11 sur un trajet de propagation de lumière depuis l'objet examiné vers le dispositif capteur, dans lequel le système de lentilles (320) comprend une section miroir (326) collée sur une zone de bordure d'une surface optique du système de lentilles faisant face à l'objet examiné, la section miroir étant agencée pour réfléchir la lumière d'excitation vers l'objet examiné.
